# EUROPEAN PATENT APPLICATION

(11) **EP 2 148 116 A1**
(43) Date of publication of application: **27.01.2010**
(21) Application number: 08013356.4
(22) Date of filing: 24.07.2008
(51) Int. Cl.: F16H 61/04, F16H 61/688, F16H 3/00

(54) **Method of controlling a double clutch transmission of a vehicle**

(71) Applicant: Hoerbiger Antriebstechnik GmbH, 86956 Schongau (DE)
(72) Inventor: Vantomme, Olivier, 8587 Spiere (BE)
(74) Representative: Kitzhofer, Thomas

(57) **Abstract**

The present invention concerns a method of controlling a double clutch transmission (1) of a vehicle (C) comprising two clutches (2, 3); and two gear sets (4, 5) each provided with at least two synchronizers (6, 7) being disposed on an associated shaft (12) characterized in, that, for engaging a target gear (15) of an associated gear set (4) at vehicle standstill, the synchronizer (6) that is disposed on the same shaft (12) as the target gear (15), is moved to one (18) of its associated gears (13, 18) in order to synchronize the shaft (12) to keep it at standstill; and that, after said synchronization, the target gear (15) is engaged by operating its associated synchronizer (7).

## Description

The present invention concerns a method of controlling a double clutch transmission of a vehicle according to the preamble part of claim 1.

In a transmission gears are engaged by the use of synchronizers, further on called synchro's. Those are mechanical devices which act as clutches to reduce the differential speed which exists when gears are not engaged.

The differential speed in a gear consists of the input speed (rotation of the clutch) and the output speed (rotation of the wheel axle). In order to engage a gear, the differential speed must be equal to zero. In normal driving conditions the reduction of differential speed can not really be sensed by the driver. If the vehicle is standing still, there shouldn't be differential speed so synchro's shouldn't, in theory, have to synchronize to engage.

In certain conditions though, the clutches can be spinning while the vehicle is standing still due to drag torque effects. The wet clutches, which have cooling oil running through them, are dragged a long with their input shaft which is connected to the engine. This drag torque can increase up to some Nm's, dragging the clutch speed up to more than 200rpm. If in this case a gear must be engaged, the engagement must overcome that small amount of torque, but when synchronized and going over to engagement a small amount of torsion can be created in the shaft. If this is the case, the shaft will tend to unwind, creating torque which in turn creates enough rotation for the vehicle wheel axles. Finally this small rotation will be sensed as longitudinal acceleration by the driver, which is unwanted when standing still.

It is, therefore, an object of the present invention to provide a method of controlling a double clutch transmission of a vehicle that is able to improve the shifting characteristics of the double clutch transmission at vehicle standstill.

The solution of this object is achieved by the features of claim 1.

Thus, the principle of the present invention as outlined in claim 1, is using a controlled, semi double engagement of synchro's in the transmission. This kind of approach is possible because a mechanical interlock system prevents simultaneous engaging of conflicting gears (on the same shaft). A synchro from another gear, if necessary with a higher ratio, will be used to keep the shaft at zero rotation speed, preventing torque or torsion to be build up while the target or the wanted gear is being engaged. In this case there will be no unwinding of the shaft and thus no creation of longitudinal acceleration of the vehicle.

The dependent claims contain advantageous embodiments of the present invention.

According to one preferred embodiment, the blocking ring position is determined by using the second derivative of the rod speed, or clutch speed in order to avoid too much assistance of the passive (assisting) synchronizer what could otherwise lead to the result that the effect of keeping the clutch speed to zero could be forced too much, resulting again in winding up of the shaft because the target synchro then, at least in some cases, really has to squeeze itself through to get engaged.

Further details, advantages and effects of the present invention will be come apparent from the following description of the drawings in which:
- Fig. 1: shows a principle schema of a double (dual) clutch transmission;
- Fig. 2: shows two diagrams explaining the normal engagement of a gear;
- Fig. 3: includes two diagrams explaining the engagement of the requested gear while the shaft is kept firm at standstill;
- Fig. 4: shows two diagrams of the engagement of the requested gear while little force is used to keep the shaft at standstill;
- Fig. 5: shows an enlarged view of a part of the principle schema of Fig. 1; and
- Fig. 6: shows a screenshot of the application of simultaneous use of synchronizers to engage a gear at standstill.

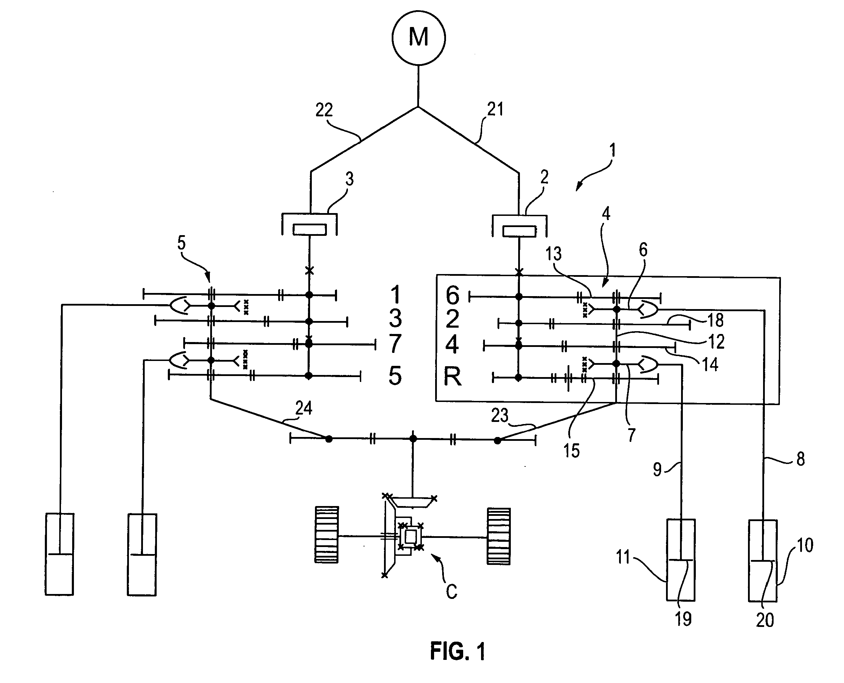

Before describing the features and specific advantages of the present application as can be gathered from Figs. 1 to 6 the following general description will be given for the purpose of explaining some of the technical terms and functions that will be used in the following description:

The selection of a gear consists of synchronizing that gear to the output shaft. For this a special mechanism is used called a synchro. This synchro is moved with a fork, mounted upon a rod which can be controlled by a hydraulically operated piston.

To synchronize the input shaft speed the synchro friction surfaces are pushed against each other in order to decrease the differential speed which exists between the input shaft and output shaft. If the vehicle is standing still and the clutch doesn't rotate then in principle the synchro can be pushed directly through to the engaged position.

Due to the drag torque which can exist in the wet clutches of a DCT, while the vehicle is standing still it is possible to have a differential speed for the synchro's. In this case, the clutch speed must be reduced in order to engage the gear, thus to push through the synchro.

Until here no problem, but due to the drag torque a constant torque is being transferred through the shaft which is being synchronized. When the synchro has overcome this torque by creating friction torque and finally engagement, a small torque is still resident in the shaft and creates a wind-up effect (torsion). If the brake is released, while vehicle is standing still, this small part of torque (torsion) will try to get free by unwinding the shaft, resulting in a small rotation at the output, being the wheels, which can be sensed as a longitudinal acceleration effect for the driver.

So, summarizing the most important features of the foregoing explanation, it should be noted that the term "synchronizer" or "synchro" identifies a mechanical device to synchronize differential speeds in gear boxes by the use of friction surfaces.

The term "blocking ring" or "blocking ring position" is the position to which the snychro must be moved to actively reduce the differential speed of gears.

The term "rod" denominates an element which is moved by a piston (controlled by hydraulic flow through solenoids) and that is connected to a fork. This fork will move an associated synchronizer which can be connected to the fork through sleeves.

The term "neutral to gear" is a procedure which consists of different steps or states which are performed in order to engage a gear. This is a strategy which uses conditions and reasons to transition to the different states of a state machine.

According to Fig. 1 a principle schema of a double clutch transmission 1 is shown. The double clutch transmission 1 comprises two clutches 2 and 3 that are associated with gear sets 4 and 5 that allow the selection of different gears. According to Fig. 1 gear set 4 is intended for gears 6 to 4 and R whilst gear set 5 is intended for gears 1, 3, 7 and 5.

As both gear sets 4 and 5 are identical in terms of elements and function in the following gear set 4 is described as a representative for both gear sets.

So, gear set 4 comprises a shaft 12 on which gears 13, 18 associated with a synchronizer 6, and gears 14 and 15 are journaled with said latter gears 14 and 15 being associated with a synchronizer 7.

The synchronizers 6 and 7 can be actuated by actuators 10 and 11 comprising hydraulically actuated pistons 19 and 20 that are connected to rods 8 and 9 that, in turn, are connected to synchronizers 6 and 7, respectively.

The vehicle that is equipped with this double clutch transmission 1 is represented by an engine M and the wheels and the differential designated by letter "C".

The engine M is connected to the double clutch transmission 1 via two concentrical input shafts 21 and 22 whilst the differential or wheels C are connected to output shafts 23 and 24, respectively of gear sets 4 and 5, respectively.

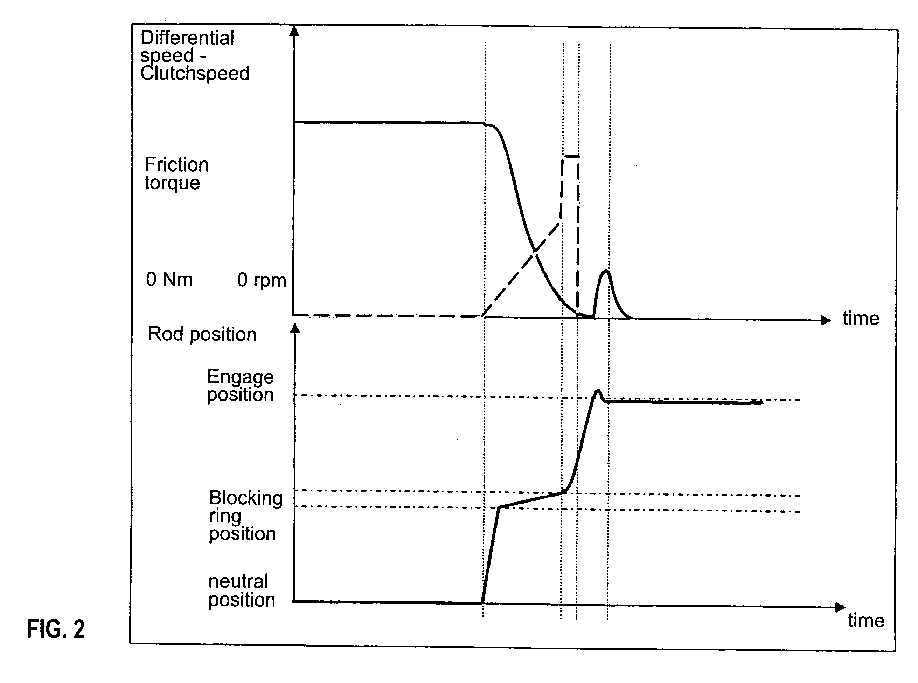

Turning now to Fig. 2 showing the normal engagement of the gear, it can be seen from Fig. 2 that, when the gear has been engaged, in most cases there is an unwinding of the shaft. The rotation or unwinding has enough energy to cause a small torque pulse at the wheels, which can be sensed by the driver.

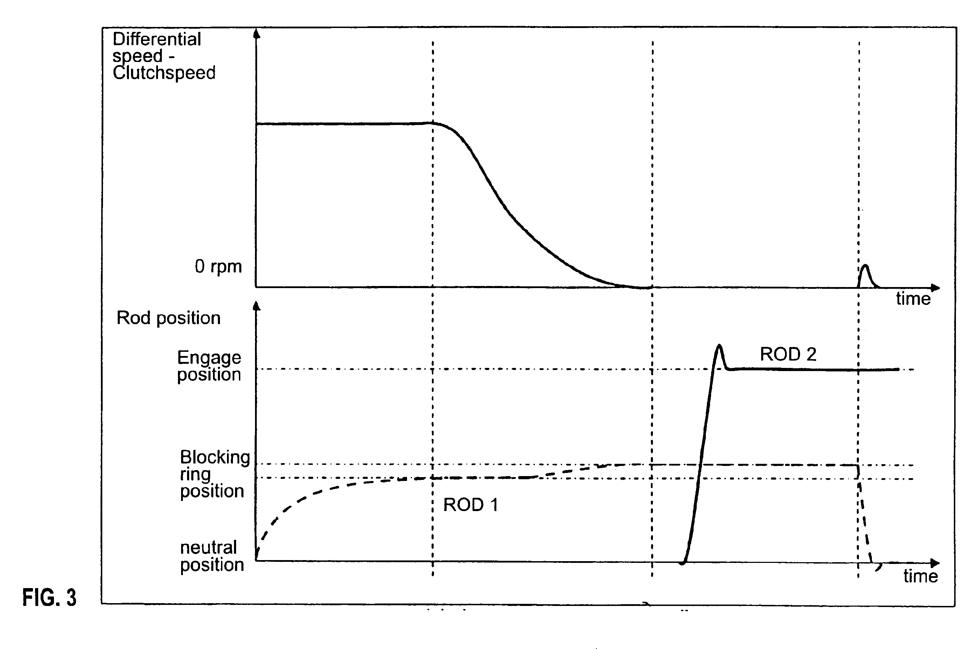

Now turning to Fig. 3, the purpose of the strategy of the present invention is to keep the active shaft (the one with the synchro which is being engaged) to zero rpm.

To engage a gear at standstill without shock, this shaft must not be rotating. To achieve this, the opposite rod (active on the same shaft) can be used to synchronize the shaft and keep it at standstill while the target gear must be engaged.

This is done by moving the opposite rod towards one of its gears where it synchronizes it until standstill. When this is done, the target gear can be engaged on the shaft which at that time is not rotating and thus without creating an additional torque on the shaft.

According to Fig. 3, the clutch speed (shaft rotating speed) is shown in the upper graph, the rod positions of rod1 (passive synchro) and rod2 (active synchro) for the target gear is shown in the lower graph. Rod1 is shown in dotted line, rod2 in a full line.

With the dotted line reference is made to the opposite rod, thus to the 'helping' or passive synchro. This synchro will bring the shaft to standstill by only synchronizing until a position nearby the blocking ring position is reached. This position is not fixed but varies with the gradient of the clutch speed and is reached when the clutch speed is zero.

As the shaft is then brought to standstill the target gear can be engaged.

A side effect of this kind of engagement strategy is that the shaft is being wound up. This means, according to Fig. 3, at the end it can be seen that there is an acceleration of the shaft because of the release of torsion which was present on the shaft. As the passive synchro of the opposite rod keeps the shaft at zero speed, the active gear 'forces' its way through to reach the engage position. Therefore this gear will in most cases endeavour to wring the shaft and thus forces torsion. When the helping or passive gear is then brought back to neutral, this torsion is relieved and converted into an acceleration of the shaft and hereby induces a perceivable shock.

To get around this phenomenon, the active synchro preferably starts its neutral position to gear (N2G) phase when the shaft speed has just reached zero speed. At this time the friction between the synchro and the blocking ring of the passive gear has just turned from dynamic friction to static friction. At this point the force applied onto the blocking ring of the passive gear is not enough to prevent the shaft from rotating when the active gear is being inserted.

When the target (active) gear has been engaged no more torque is transferred by the passive synchro. Normally, this would then result in an engagement of the passive gear, but this is avoided by the interlock mechanism which prevents simultaneous engagement of gears on the same shaft. Therefore the simultaneous activation of two synchro's onto the same shaft can't cause a security issue.

As soon as the requested gear has been engaged the passive synchro can be brought back to neutral without perceivable shock as no more noticeable torsion was present on the shaft.

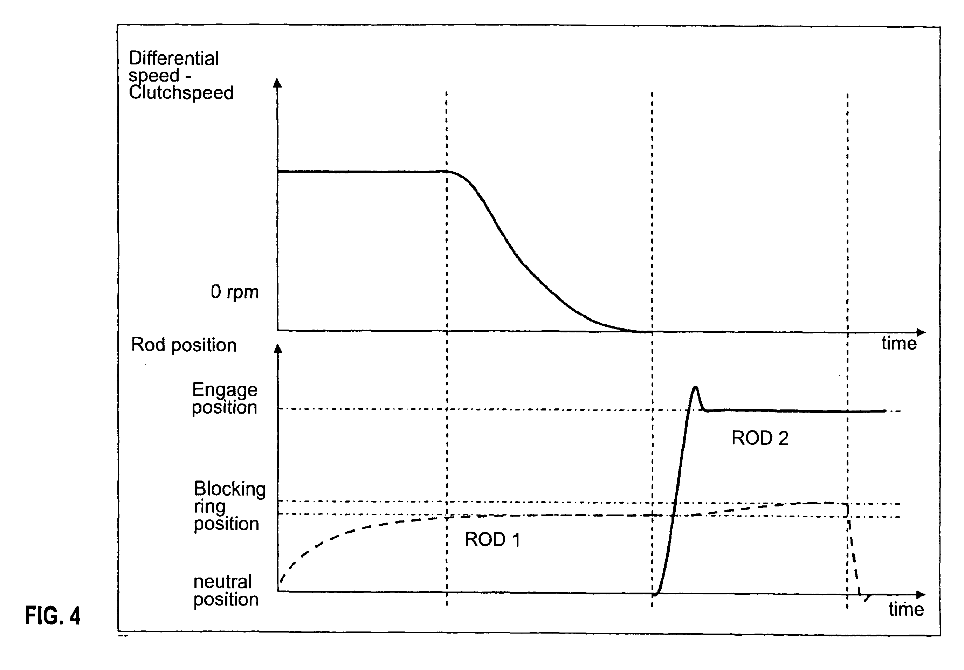

According to Fig. 4, to control the amount of force used for the passive synchro and thus to make the synchronization more precise, the gear ratios of the gears on that shaft must be considered. In Fig. 1 it can be seen schematically that the ratio of 6^{th} is >1, that of 2^{nd} <1. Therefore if the pressure applied is too high, thus the synchro brought too far, this will have a bigger effect on 6^{th} gear then on 2^{nd} gear. This is because from synchronizer point of view, the ratio for 6^{th} is < 1 and for 2^{nd} > 1.

A logical conclusion when the picture above is viewed, is that this principle can be applied in just the same way on the other shaft, e.g. for the engagement of 1^{st} gear by use of 5^{th} or 7^{th} gear. On the next page the principle is shown, while being performed on a DCT in a car, measured with CANape.

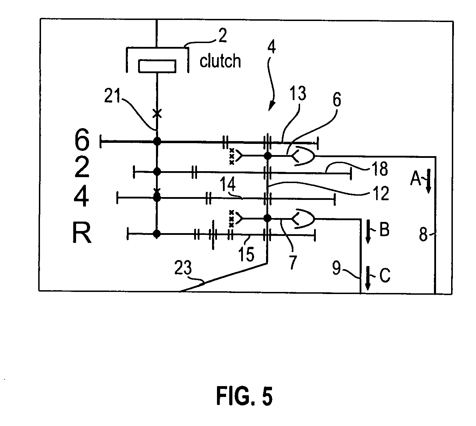

According to Fig. 5 the method according to the present invention is explained again. Fig. 5 is an enlarged view of gear set 4 according to Fig. 1 showing an arrow A that characterizes the movement of the synchronizer 6 for the second gear to the block ring position for the synchronization of the shaft 12 meaning that the shaft speed is at least approximal zero.

Arrow B depicts the movement of the synchronizer 7 for the gear R to the blocking ring position whilst arrow C designates the movement of the synchronizer 7 to the engagement position with gear 15.

In this connection it is to be emphasized that the principles of the present invention that have herein before been described with reference to gear set 4 can, of course, also be applied to gear set 5.

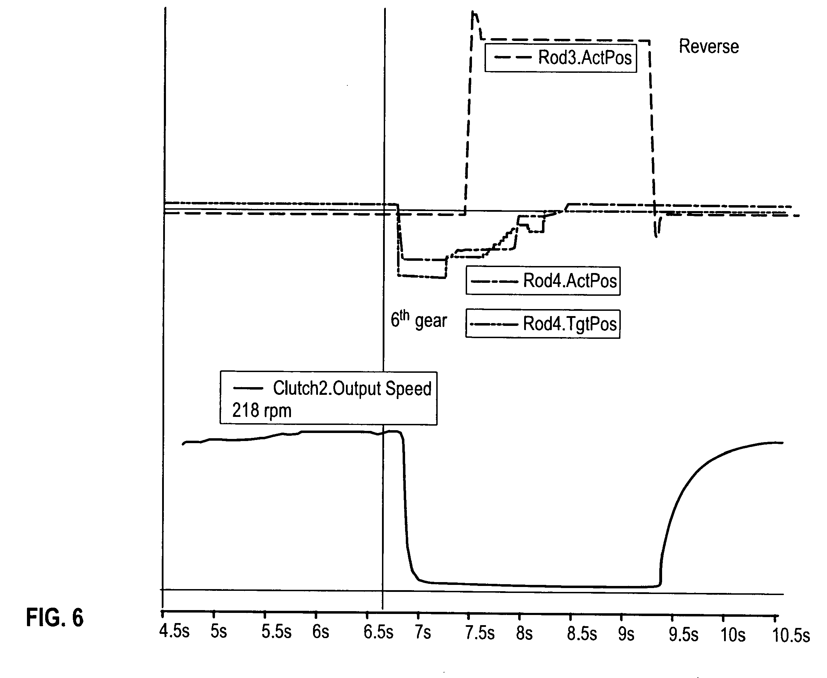

Referring to Fig. 6 it is to be outlined that the whole process was preferably done very slow, requiring a time of more than 1500 ms. In optimized or calibrated conditions, but not yet software controlled routines such as an N2G procedure, this could be done in 400 ms. With "calibrated" is meant that for a certain transmission the blocking ring position used for the method according to the present invention can be precisely determined and a PID controller can be regulated in such a way that the best behaviour can be obtained. To this end, reference will be made in the following to Fig. 2.

Fig. 6 also shows that the assisting synchro, as soon as clutch speed has reached zero speed and static friction is active, is moved back a little bit to reduce the applied friction torque. This smaller amount of force applied to the rod, resulting into less friction torque is still enough to keep the static friction active. This is an advantage to overcome the wind-up torque being created during the engagement of the active synchronizer.

In Fig. 2 it can be seen that the rod position is still changing while synchronizing. While synchronizing the friction surfaces are pushed harder in time to get synchronized. For the method according to the invention to be effective, the blocking ring position is preferably determined.

If the rod is pushed without being controlled, the torque developed by the passive synchro can be too much, which means that more torque is applied on the surfaces than necessary. In that case the active synchro could have trouble engaging, as the teeth are not always perfect in place. If the teeth have to force themselves to get through, this can also create torsion on the shaft, which is not wanted.

As can be seen in Fig. 3 and 4, the position to which the passive synchro is forced will determine the good ending of the method. The pressure applied to this synchro can't be too high, thus the PID controller used to control the position should be weak.

In addition to the foregoing written disclosure of the present invention it is herewith explicitly made reference to the disclosure of the invention in Figs. 1 to 6.

### List of reference signs

- 1: double clutch transmission
- 2, 3: clutches
- 4, 5: gear sets
- 6, 7: synchronizers
- 8, 9: rods
- 10, 11: actuators
- 12: shaft
- 13, 14, 15, 18: gears
- 19, 20: pistons
- 21, 22: concentrical input shafts
- 23, 24: output shafts
- A, B, C: arrows
- M: engine
- C: vehicle

## Claims

1. Method of controlling a double clutch transmission (1) of a vehicle (C) comprising:
- two clutches (2, 3); and
- two gear sets (4, 5) each provided with at least two synchronizers (6, 7) being disposed on an associated shaft (12) **characterized in,**
- **that**, for engaging a target gear (15) of an associated gear set (4) at vehicle standstill, the synchronizer (6) that is disposed on the same shaft (12) as the target gear (15), is moved to one (18) of its associated gears (13, 18) in order to synchronize the shaft (12) to keep it at standstill; and
- **that**, after said synchronization, the target gear (15) is engaged by operating its associated synchronizer (7).

2. Method according to claim 1 being **characterized in that** a blocking ring position of the synchronizing synchronizer (6) is determined by using the second derivative of the speed of a rod (8) of said synchronizer (6) or the speed of the associated clutch (2).

3. Method according to claim 1 or 2 being **characterized by** preventing simultaneous engagement of the gears (15, 18) by using an interlock mechanism.

4. Method according to one of claims 1 to 3 being **characterized in that** the synchronizing synchronizer (6) is transferred back to its neutral position after its synchronizing action.
